# FASCICULE DE BREVET EUROPEEN

(11) **EP 3 155 843 B1**
(45) Date de publication et mention de la délivrance du brevet: **02.09.2020**
(21) Numéro de dépôt: 15732853.5
(22) Date de dépôt: 11.06.2015
(51) Int. Cl.: H04W 48/08, H04W 48/16, H04W 4/80, H04W 76/11, H04W 76/16, H04W 88/06

(54) **TECHNIQUE DE GESTION D'UN ETAT D'ACTIVATION D'UN MODULE D'ACCES RADIO**
TECHNIK ZUR VERWALTUNG EINES AKTIVIERUNGSZUSTANDS EINES FUNKZUGANGSMODULS
TECHNIQUE FOR MANAGING AN ACTIVATION STATE OF A RADIO ACCESS MODULE

(30) Priorité: 16.06.2014 FR 1455499
(43) Date de publication de la demande: 19.04.2017
(73) Titulaire: ORANGE, 75015 Paris (FR)
(72) Inventeur: AUVRAY, Vincent, 50130 Octeville (FR)
(86) Numéro de dépôt international: PCT/FR2015/051537
(87) Numéro de publication internationale: WO 2015/193585

(56) Documents cités:
- WO-A1-2014/109510
- US-A1- 2008 058 031
- US-A1- 2012 040 639
- US-A1- 2012 178 448
- US-A1- 2013 005 391
- US-A1- 2013 252 608
- US-A1- 2014 079 022

## Description

L'invention se rapporte au domaine général des télécommunications.

L'invention concerne plus particulièrement une technique de gestion d'un état d'activation d'un module d'accès radio d'un dispositif, ce module permettant un accès à un réseau principal.

Le réseau principal est par exemple un réseau de communication WiFi. Ce réseau principal s'appuie sur des points d'accès WiFi, utilisant notamment la technologie de transmission sans fil basée sur la norme de réseau radioélectrique IEEE 802.11 et ses évolutions communément regroupées sous l'appellation WiFi (pour « Wireless Fidelity »). Un point d'accès Wifi offre un accès à un réseau de communication étendu, par exemple Internet, à des dispositifs situés dans sa zone de couverture radio. Ces dispositifs une fois connectés au point d'accès WiFi forment avec le point d'accès un réseau local LAN (pour «Local Area Network ») ou personnel PAN (pour « Personal Area Network »).

Ces dispositifs sont par exemple des terminaux mobiles, tels que des terminaux intelligents « smartphone » ou des tablettes. Une fois connectés à un point d'accès, ils peuvent ainsi recevoir des données en provenance des autres dispositifs du réseau local ou bien de dispositifs connectés au réseau de communication étendu et envoyer des données à destination d'un équipement du réseau local ou connecté au réseau de communication étendu.

Les points d'accès correspondent par exemple à des zones d'accès (« hotspot » en anglais). Ces zones d'accès n'assurent généralement pas une couverture radio continue.

Ainsi, lorsqu'un de ces dispositifs est déplacé, il sort de la zone de couverture du point d'accès et peut se retrouver en dehors de zones d'accès. De plus, le point d'accès sélectionné peut également ne plus être disponible, par exemple pour des raisons de charge. Dans ces différents cas, le dispositif recherche alors un nouveau point d'accès WiFi pour se connecter. Cette recherche s'effectue de manière répétée, jusqu'à ce qu'un nouveau point d'accès soit détecté.

Cette recherche entraîne une consommation énergétique de l'ordre de plusieurs dixièmes de watts, ce qui n'est pas négligeable pour la batterie d'un tel dispositif.

Le document brevet US2008/058031 décrit un procédé permettant d'optimiser la batterie d'un dispositif utilisateur pour se connecter à un réseau d'accès radio sans fil.

Le document US2012/040639 décrit une méthode pour faciliter un accès à un réseau principal en utilisant la technologie Bluetooth.

Un des buts de l'invention est de remédier à des insuffisances/inconvénients de l'état de la technique et/ou d'y apporter des améliorations.

Selon un premier aspect, l'invention a pour objet un procédé de gestion d'un état d'activation d'un module d'accès radio à un réseau principal d'un dispositif utilisateur. Ce dispositif comprend en outre un module d'accès radio à un réseau secondaire, activé. Le procédé comprend les étapes suivantes mises en œuvre par ce dispositif :
- lorsque le module d'accès radio au réseau principal est désactivé, recherche d'un signal balise du réseau secondaire ;
- détection d'un signal balise du réseau secondaire diffusé par un dispositif émetteur associé à un point d'accès du réseau principal ;
- réception d'une information diffusée sur le signal balise ;
- obtention d'un identifiant du point d'accès à partir de ladite information diffusée ;
- suite à la détection, activation du module d'accès radio au réseau principal ; et,
- connexion au réseau principal par l'intermédiaire du point d'accès identifié par ledit identifiant.

Un état d'activation « activé » est associé à un module d'accès radio en service.

Un état d'activation « désactivé » est associé à un module d'accès radio en veille ou non alimenté.

Grâce à l'association d'un dispositif émetteur du réseau secondaire à un point d'accès du réseau principal, le dispositif utilisateur peut avoir son module d'accès radio principal désactivé et le réactiver uniquement lorsqu'il reçoit le signal balise d'un dispositif émetteur du réseau secondaire. Ainsi, dans des zones géographiques dans lesquelles aucun accès au réseau principal n'est proposé, la consommation énergétique induite par la recherche d'un point d'accès du réseau principal est très fortement diminuée. Le réseau principal est un réseau selon une première technologie d'accès, par exemple de type WiFi. Le réseau secondaire est un réseau sans fil basse consommation selon une deuxième technologie d'accès. Il s'agit par exemple d'un réseau d'accès radio de technologie BLE, pour « Bluetooth Low Energy ». Pour un réseau secondaire de type BLE, cette consommation énergétique est de l'ordre de quelques milliwatts, à comparer avec plusieurs dixièmes de watts pour une recherche de réseau radio principal.

Une fois, le module d'accès radio principal activé, le dispositif utilisateur peut alors rechercher les points d'accès du réseau principal accessibles, plus précisément le point d'accès auquel est associé le dispositif émetteur du réseau secondaire. On constate ainsi que la recherche est uniquement déclenchée lorsqu'il est garanti que le résultat de cette recherche sera positif. Ceci évite au dispositif utilisateur de rechercher de manière répétée des points d'accès du réseau principal.

Une fois l'identifiant au point d'accès associé obtenu, le dispositif utilisateur peut se connecter plus rapidement. En effet, la recherche d'un point d'accès du réseau principal s'arrête dès que le point d'accès identifié est détecté. La consommation énergétique est encore diminuée.

Les différents modes ou caractéristiques de réalisation mentionnés ci-après peuvent être ajoutés indépendamment ou en combinaison les uns avec les autres, aux étapes du procédé de gestion tel que défini précédemment.

Dans un mode de réalisation particulier, l'identifiant est obtenu auprès d'un dispositif central par l'intermédiaire d'un troisième réseau d'accès radio.

Ce mode de réalisation est particulièrement adapté aux dispositifs utilisateur disposant d'un accès à un troisième réseau, par exemple à un réseau mobile 3GPP. L'association du dispositif émetteur du réseau secondaire avec le point d'accès du réseau principal peut ainsi facilement être mise à jour par l'opérateur de ces réseaux. Le déploiement des réseaux principal et secondaire est également facilité : de nouvelles associations peuvent être créées facilement.

Dans un mode de réalisation particulier, une association entre l'information et l'identifiant est mémorisée localement.

Il est ainsi très simple pour le dispositif utilisateur d'obtenir l'identifiant du point d'accès du réseau principal auquel le dispositif émetteur du réseau secondaire est associé.

Dans un mode de réalisation particulier, l'information diffusée comprend l'identifiant.

Il est ainsi très simple pour le dispositif utilisateur d'obtenir l'identifiant du point d'accès du réseau principal auquel le dispositif émetteur du réseau secondaire est associé, par lecture de l'information diffusée.

Dans un mode de réalisation particulier, le procédé de gestion comprend en outre une étape de détection d'une déconnexion du dispositif du réseau principal et une étape de désactivation du module d'accès radio au réseau principal.

La désactivation du module d'accès radio principal permet ainsi de diminuer les coûts énergétiques du dispositif utilisateur.

Selon un deuxième aspect, l'invention concerne également un dispositif utilisateur comprenant :
- un module d'accès radio à un réseau principal ;
- un module d'accès radio à un réseau secondaire, activé, agencé pour rechercher un signal balise du réseau secondaire lorsque le module d'accès radio au réseau principal est désactivé, pour détecter un signal balise du réseau secondaire diffusé par un dispositif émetteur associé à un point d'accès du réseau principal et pour recevoir une information diffusée sur un signal balise détecté ;
- un module de commande, agencé pour obtenir un identifiant du point d'accès à partir de ladite information diffusée, pour activer le module d'accès radio au réseau principal sur détection d'un signal balise et déclencher une connexion au réseau principal par l'intermédiaire du point d'accès identifié par ledit identifiant.

Les avantages énoncés pour le procédé de gestion selon le premier aspect sont transposables directement au dispositif utilisateur.

Selon un troisième aspect, l'invention concerne également un système d'accès à un réseau principal, comprenant au moins un point d'accès du réseau principal, au moins un dispositif émetteur du réseau secondaire associé audit au moins un point d'accès et un dispositif utilisateur selon le deuxième aspect.

Les avantages énoncés pour le procédé de gestion selon le premier aspect sont transposables directement au système.

Selon un quatrième aspect, l'invention concerne un programme pour un dispositif utilisateur, comprenant des instructions de code de programme destinées à commander l'exécution des étapes du procédé de gestion selon le premier aspect mises en œuvre par le dispositif utilisateur, lorsque ce programme est exécuté par ce dispositif et un support d'enregistrement lisible par un dispositif utilisateur sur lequel est enregistré un programme pour un dispositif.

Les avantages énoncés pour le procédé de gestion selon le premier aspect sont transposables directement au programme pour un dispositif utilisateur et au support d'enregistrement.

L'invention sera mieux comprise à l'aide de la description suivante de modes de réalisation particuliers de la technique de gestion, en référence aux dessins annexés sur lesquels :
- la figure 1 représente un premier environnement dans lequel est mise en œuvre la technique de gestion ;
- la figure 2 illustre un deuxième environnement dans lequel est mise en œuvre la technique de gestion ;
- les figures 3a-3b illustrent des étapes d'un procédé de gestion selon des modes particuliers de réalisation ;
- la figure 4 représente un dispositif utilisateur selon un mode particulier de réalisation.

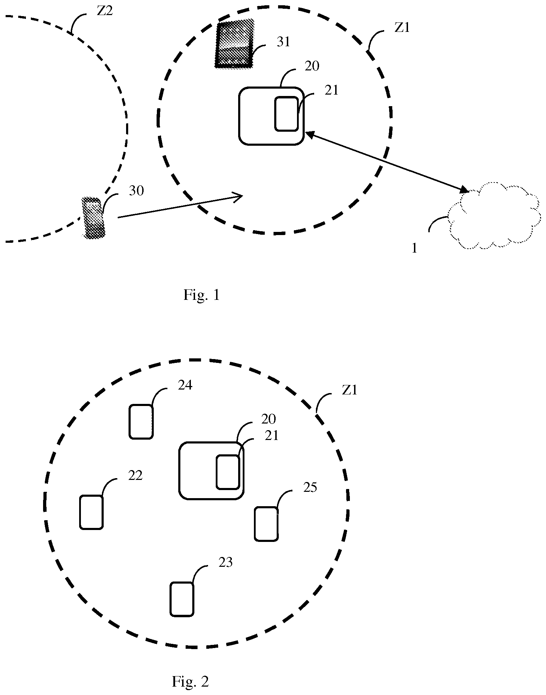

La figure 1 représente un dispositif utilisateur 30 dans un premier environnement.

Un point d'accès 20 offre un accès à un réseau de communication étendu 1, tel que le réseau Internet, à des dispositifs situés dans une zone de couverture radio Z1. Ce point d'accès 20 comprend un module d'accès radio principal selon une première technologie d'accès de type Wi-Fi, selon la norme IEEE 802.11 « Wireless LAN Médium Access Control (MAC) and Physical Layer (PHY) Spécifications» (802.11a/b/g/n/ac). Le point d'accès 20 communique ainsi avec des dispositifs qui sont localisés dans sa zone de couverture radio Z1 par l'intermédiaire d'une connexion sans fil, appelée par la suite connexion sans fil principale. Au moyen de cette connexion sans fil principale, les dispositifs une fois connectés peuvent accéder au réseau de communication étendu 1 par l'intermédiaire du point d'accès 20. Dans un mode de réalisation particulier, le point d'accès 20 comprend en outre un module d'accès radio secondaire 21. Le module d'accès radio secondaire est de type radio basse consommation selon une deuxième technologie d'accès, adaptée pour des réseaux personnels sans fil, telle que Bluetooth ®, Zigbee ®, Z-Wave ®. Ce type de module d'accès radio de faible puissance permet d'assurer une couverture radio dans une zone appelée WPAN (pour « Wireless Personal Area Network »).

Un réseau radio secondaire Bluetooth ® s'appuie sur la spécification IEEE 802.15.1 "Wireless Médium Access Control (MAC) and Physical Layer (PHY) Spécifications for Wireless Personal Area Networks (WPANs)" et opère dans la bande de fréquences de 2.4 GHz. Il existe également une version basse consommation de cette technologie, connue sous la dénomination BLE « Bluetooth Low Energy ».

Un réseau radio secondaire Zigbee ® s'appuie sur la spécification IEEE 802.15.4 ("Low-Rate Wireless Personal Area Network (LR-WPAN) standard") et opère également dans la bande de fréquences de 2.4 GHz. Zigbee ® est notamment adapté pour rendre un service de contrôle à distance d'un dispositif.

Un réseau radio secondaire Z-Wave ® s'appuie sur des produits certifiés par l'Alliance Z-Wave et opère dans la bande de fréquences de 868,42 MHz.

Le module d'accès radio secondaire 21, appelé dispositif émetteur, émet un signal balise, également appelé « Beacon ».

Dans ce premier environnement, le point d'accès 20 du réseau principal et un dispositif émetteur 21 du réseau secondaire sont colocalisés. Plus précisément, dans un mode de réalisation particulier, le point d'accès 20 comprend un module d'accès radio secondaire 21 et joue ainsi le rôle du dispositif émetteur. Dans un autre mode de réalisation particulier, le point d'accès 20 et le dispositif émetteur 21 sont placés dans un même site physique d'émission.

La puissance d'émission du module d'accès radio secondaire 21 est ajustée afin d'obtenir la même zone de couverture radio Z1 que celle offerte par le point d'accès 20. On comprend que les zones de couverture radio entre les types d'accès radio ne peuvent être rigoureusement identiques en raison de différences liées à la propagation des ondes radio. Toutefois, l'exigence minimum est que la zone de couverture radio du module d'accès secondaire 21 soit comprise dans la zone de couverture radio Z1 du point d'accès 20.

Un autre point d'accès, non représenté sur la figure 1, offre un accès au réseau de communication étendu 1 dans une zone de couverture radio Z2. Cette zone de couverture radio Z2 n'a pas de recouvrement avec la zone de couverture radio Z1. Il existe ainsi une zone géographique dans laquelle aucun accès au réseau principal n'est possible. Il est bien entendu qu'il s'agit d'un mode particulier de réalisation adapté à la description de la technique de gestion. D'autres points d'accès peuvent également être disponibles et présenter des zones de couverture radio avec un recouvrement partiel avec la zone de couverture radio Z1.

Deux dispositifs utilisateur 30, 31 sont représentés sur la figure 1. Le dispositif utilisateur 30 est un terminal mobile et le dispositif utilisateur 31 est une tablette tactile. Ces deux dispositifs utilisateur 30, 31 disposent chacun d'un module d'accès radio principal pour communiquer avec le point d'accès 20 ou tout autre point d'accès du réseau principal. Les dispositifs utilisateur 30, 31 disposent également chacun d'un module d'accès radio secondaire. Leurs modules d'accès radio secondaire sont toujours dans un état d'activation « activé », c'est-à-dire en service.

Le dispositif utilisateur 31 se trouve dans la zone de couverture radio Z1 et est connecté au point d'accès 20. Le dispositif utilisateur 30 initialement connecté au point d'accès de zone de couverture radio Z2 se déplace et sort de cette zone de couverture radio. Il se dirige vers la zone de couverture radio Z1 du point d'accès 20. Ce déplacement est matérialisé sur la figure 1 par une flèche.

Seuls deux dispositifs utilisateur sont représentés sur la figure 1. Aucune limitation n'est attachée au nombre de dispositifs utilisateur, ni aux types de ces dispositifs.

La figure 2 illustre un deuxième environnement dans lequel plusieurs dispositifs émetteurs 21-25 du réseau secondaire sont associés au point d'accès 20 du réseau principal. Le dispositif émetteur 21 est colocalisé avec le point d'accès 20. Les autres dispositifs émetteurs 22-25 sont répartis dans la zone de couverture radio Z1 du point d'accès 20. Plusieurs dispositifs émetteurs sont ainsi associés avec le point d'accès 20 pour permettre une couverture radio équivalente à celle de la zone de couverture radio Z1.

Il est également possible de déployer des dispositifs émetteurs de manière à assurer une couverture radio par le réseau secondaire sur une zone couronne centrée sur le point d'accès. Ceci permet de détecter l'entrée du dispositif utilisateur dans la zone de couverture radio du point d'accès. Le nombre de dispositifs émetteurs à prévoir est inférieur à celui à prévoir pour le deuxième environnement. Le déploiement du réseau secondaire est ainsi moins coûteux.

Pour ces deux environnements, la détection d'un signal balise du réseau secondaire diffusé par un dispositif émetteur 21-25 associé au point d'accès 20 du réseau principal permet de commander une activation du module d'accès radio au réseau principal. Ainsi, ce module d'accès radio principal ne consomme pas d'énergie lorsque le dispositif utilisateur est en dehors d'une zone de couverture radio d'un point d'accès au réseau principal. Une fois le signal balise du réseau secondaire détecté, le dispositif utilisateur 30 se connecte au réseau principal par l'intermédiaire du point d'accès 20. Réciproquement, la détection d'une déconnexion du dispositif utilisateur 30 du réseau principal commande une désactivation du module d'accès radio au réseau principal.

On rappelle ici que pour se connecter au réseau principal, le dispositif utilisateur 30 scanne l'ensemble des canaux prévus pour cette première technologie d'accès pour identifier le ou les points d'accès du réseau principal dont la zone de couverture radio couvre l'emplacement géographique du dispositif utilisateur, puis sélectionne un point d'accès et transmet une demande d'accès.

Dans un mode de réalisation particulier, le signal balise diffusé par un dispositif émetteur 21-25 du réseau secondaire comprend notamment une information permettant d'obtenir un identifiant d'un point d'accès du réseau principal associé. Un identifiant du point d'accès correspond par exemple à l'information SSID, pour « Service Set Identifier ». Cette information SSID est une clé alphanumérique d'une longueur maximum de 32 caractères identifiant de manière unique un point d'accès. Pour se connecter, le dispositif utilisateur 30 arrête sa recherche de points d'accès dès qu'il détecte le point d'accès identifié.

Dans une première variante, l'identifiant du point d'accès est obtenu sur requête du dispositif utilisateur 30 auprès d'un dispositif central par l'intermédiaire d'un troisième réseau d'accès radio. Ce troisième réseau d'accès radio correspond par exemple à un réseau de communication mobile, tel qu'un réseau 3GPP. Le dispositif central mémorise une association entre l'information diffusée portée par le signal balise et l'identifiant du point d'accès et fournit ainsi en réponse à la requête l'identifiant du point d'accès associé. Le dispositif central est sous contrôle de l'opérateur des réseaux principal et secondaire. Il est ainsi plus facile de faire évoluer les associations entre points d'accès et dispositifs émetteurs et d'ajouter de nouvelles associations lors d'un déploiement de nouveaux équipements.

Dans une deuxième variante, le dispositif utilisateur 30 mémorise localement dans une zone mémoire une association entre l'information diffusée et l'identifiant du point d'accès. Les associations sont par exemple mises à jour lorsque le dispositif utilisateur est connecté au réseau principal.

Une clé d'appairage peut également être mémorisée en association avec l'information diffusée. Dans la première variante, la clé d'appairage est fournie en réponse à la requête envoyée par le dispositif utilisateur. Elle peut être fournie conjointement avec l'identifiant du point d'accès ou bien lors d'une deuxième réponse. Dans la deuxième variante, la clé d'appairage est obtenu conjointement avec l'identifiant du point d'accès. Le dispositif utilisateur 30 s'appaire alors directement avec le point d'accès.

Dans une troisième variante, l'information diffusée comprend l'identifiant du point d'accès associé.

A titre d'exemple illustratif, l'information diffusée comprend un préfixe correspondant à un identifiant de l'opérateur des réseaux principal et secondaire et un suffixe correspondant à l'identifiant du point d'accès associé. Le dispositif utilisateur 30 obtient ainsi simplement l'identifiant du point d'accès à partir de l'information diffusée.

Toujours à titre d'exemple illustratif, l'information diffusée correspond à l'identifiant du point d'accès associé.

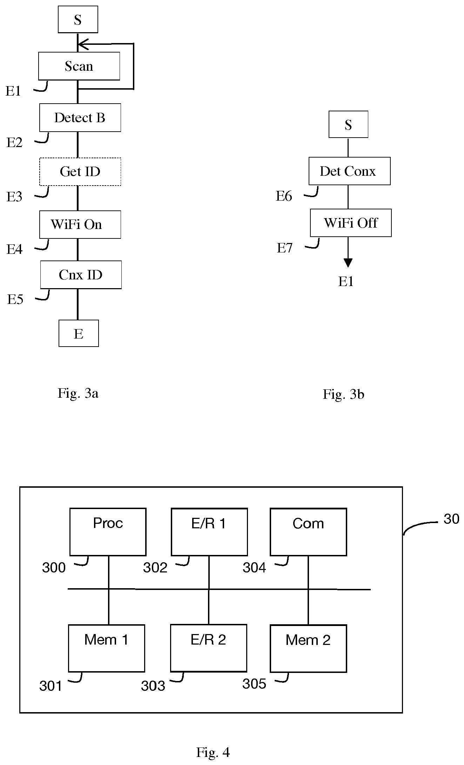

Nous allons maintenant décrire la technique de gestion d'un état d'activation d'un module d'accès radio à un réseau principal dans des modes particuliers de réalisation, mis en œuvre par le dispositif utilisateur 30 en relation avec les figures 3a-3b.

A l'état initial, le module d'accès radio principal est dans un état d'activation « désactivé », c'est-à-dire éteint ou mis en veille. On rappelle que le module d'accès radio secondaire est toujours quant à lui activé.

Dans un premier mode de réalisation, dans une étape E1, le dispositif utilisateur 30 recherche un signal balise du réseau secondaire émis par un des dispositifs émetteurs 21-25.

Dans une étape E2, un signal balise diffusé par un dispositif émetteur 21 est détecté.

Dans une étape E4, le dispositif utilisateur commande une activation du module d'accès radio principal, c'est-à-dire une mise en service. Cette mise en service peut correspondre à une sortie d'un état de veille ou bien à une mise sous tension du module. L'état d'activation est alors « activé ».

Dans une étape E5, le dispositif utilisateur 30 recherche un point d'accès du réseau principal et se connecte au réseau principal par l'intermédiaire du point d'accès 20. La connexion peut être automatique ou bien être déclenchée suite à une confirmation de l'utilisateur du dispositif 30. Le dispositif utilisateur 30 peut alors communiquer avec les autres dispositifs connectés au réseau principal ou au réseau de communication étendu 1 par l'intermédiaire du point d'accès 20.

Dans une étape E6, le dispositif utilisateur 30 détecte qu'il n'est plus connecté au réseau principal. Cette déconnexion fait suite par exemple à un déplacement du dispositif utilisateur en dehors de la zone de couverture radio du point d'accès 20 ou de celle de points d'accès du réseau principal, ou bien encore à une dégradation de la connexion sans fil principale.

Dans une étape E7, le dispositif utilisateur 30 désactive son module d'accès radio principal et repasse à l'étape E1 de recherche d'un signal balise du réseau secondaire.

Dans une variante, à l'étape E7, le dispositif utilisateur 30 met en œuvre de nouveau l'étape E1 de recherche du signal balise du réseau secondaire et en cas d'échec de détection, désactive alors son module d'accès radio principal. Ceci permet d'éviter une activation du module d'accès radio principal immédiatement après une désactivation de celui-ci.

Dans un deuxième mode de réalisation, suite à la détection à l'étape E2 d'un signal balise, le dispositif utilisateur 30 reçoit dans une étape E3 une information diffusée portée par le signal balise. A partir de l'information diffusée, le dispositif utilisateur 30 obtient un identifiant du point d'accès 20. On rappelle ici que selon les différentes variantes de réalisation décrites précédemment, l'identifiant du point d'accès peut être obtenu localement par lecture d'une zone mémoire, sur requête par interrogation du dispositif central ou bien encore être déduit directement de l'information diffusée.

A l'étape E4, le dispositif utilisateur commande une activation du module d'accès radio principal, c'est-à-dire une mise en service, comme décrite précédemment.

A l'étape E5, le dispositif utilisateur 30 recherche le point d'accès identifié et se connecte au réseau principal par l'intermédiaire du point d'accès 20. Dans ce deuxième mode de réalisation, la connexion s'effectue plus rapidement et la consommation énergétique est encore réduite. En effet, dès que le point d'accès identifié est détecté, la recherche s'arrête et la connexion est réalisée.

Ceci permet d'économiser la batterie du dispositif utilisateur 30 sans ajouter de complexité de gestion du module d'accès radio principal pour l'utilisateur du dispositif. En effet, le le réseau principal est mis en service sur détection d'un signal balise du réseau secondaire. Dans un des modes de réalisation particulier, la mise en service est automatique et l'utilisateur n'a pas besoin d'interagir avec son dispositif utilisateur pour activer/désactiver son module d'accès radio principal. Dans un autre mode de réalisation, une simple confirmation lui est demandée. De plus, la mise en œuvre des étapes du procédé est complètement transparente pour l'utilisateur. L'arrivée du dispositif utilisateur dans la zone de couverture radio du dispositif émetteur associé au point d'accès déclenche en effet l'activation du module d'accès radio principal. Une extinction ou mise en veille du module d'accès radio principal peut ainsi être mise en œuvre de manière plus fréquente, du fait d'une remise en service plus simple.

Pour résumer, un réseau radio secondaire est prévu en complément du réseau radio principal. Ce réseau radio secondaire est construit de manière à ce qu'au moins un dispositif émetteur du réseau secondaire se trouve dans la zone de couverture radio d'un point d'accès auquel il est associé. Le réseau radio secondaire est en permanence activé et le dispositif utilisateur peut ainsi détecter le signal balise lorsqu'il entre dans la zone de couverture radio du dispositif émetteur.

La technique de gestion permet ainsi de désactiver le module d'accès radio principal du dispositif utilisateur lorsqu'il est en dehors de la couverture radio du réseau principal. La présence du module d'accès radio secondaire permet d'activer le module d'accès radio principal dès que le dispositif utilisateur est de nouveau sous la couverture radio du réseau principal. La consommation énergétique du dispositif utilisateur est alors diminuée.

Nous allons maintenant décrire un dispositif utilisateur 30 dans un mode particulier de réalisation en référence à la figure 4. Un tel dispositif utilisateur comprend notamment :
- une zone mémoire 301, agencée pour mémoriser un programme qui comprend des instructions de code pour mettre en œuvre les étapes du procédé de gestion d'un état d'activation, tel que décrit précédemment ;
- une mémoire de stockage 305, agencée pour stocker des données utilisées lors de la mise en œuvre du procédé de gestion d'un état d'activation :
- un processeur 300 pour exécuter des instructions de code de modules logiciels ;
- un module 302 d'accès radio principal, agencé pour envoyer et recevoir des données conformément à une première technologie d'accès, notamment pour communiquer sur le réseau principal avec au moins un point d'accès ;
- un module 303 d'accès radio secondaire, distinct du module d'accès radio principal, agencé pour recevoir des données conformément à une deuxième technologie d'accès, notamment pour rechercher un signal balise du réseau secondaire lorsque le module d'accès radio au réseau principal est désactivé, et détecter un signal balise diffusé par un dispositif émetteur du réseau secondaire ;
- un module 304 de commande, agencé pour modifier l'état d'activation du module de « désactivé » à « activé » sur détection du signal balise et pour déclencher une connexion au réseau principal par l'intermédiaire du point d'accès.

Il est ici souligné que le dispositif utilisateur 30 comprend également d'autres modules de traitement, non représentés sur la figure 4, agencés pour mettre en œuvre les différentes fonctions d'un dispositif utilisateur.

Dans un mode de réalisation particulier, le module d'accès radio secondaire 303 est en outre agencé pour recevoir une information diffusée sur un signal balise détecté et le module 304 de commande est agencé pour obtenir un identifiant du point d'accès à partir d'une information diffusée portée par le signal balise.

Dans un mode de réalisation particulier, le module 304 de commande est en outre agencé pour désactiver le module d'accès radio principal 302 lorsque ce dernier ne reçoit plus de signaux émis par des points d'accès au réseau principal.

Dans un mode de réalisation particulier, le dispositif utilisateur 30 est un terminal intelligent (« smartphone ») et comprend un système d'exploitation. Le système d'exploitation du dispositif utilisateur est alors agencé pour réveiller le module de commande 304 lorsque le module d'accès radio secondaire 303 détecte un signal balise du réseau secondaire.

La technique de gestion est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, le module 302, 303, 304 est agencé pour mettre en œuvre le procédé de gestion précédemment décrit. Il s'agit de préférence d'un module logiciel comprenant des instructions logicielles pour faire exécuter les étapes du procédé de gestion précédemment décrit, mises en œuvre par un dispositif utilisateur. L'invention concerne donc aussi :
- un programme pour un dispositif utilisateur, comprenant des instructions de code de programme destinées à commander l'exécution des étapes du procédé de gestion précédemment décrit, lorsque ledit programme est exécuté par ce dispositif utilisateur ;
- un support d'enregistrement lisible par un dispositif utilisateur sur lequel est enregistré le programme pour un dispositif.

Les modules logiciels peuvent être stockés dans ou transmis par un support de données. Celui-ci peut être un support matériel de stockage, par exemple un CD-ROM, un moyen d'enregistrement magnétique, par exemple une disquette magnétique ou un disque dur. D'autre part, le support de données peut être un support de transmission tel qu'un signal électrique, optique ou radio, qui peut être acheminé via un câble électrique ou optique, par radio ou par d'autres moyens. Les instructions de code de programme peuvent être en particulier téléchargées sur un réseau de type Internet.

Alternativement, le support de données peut être un circuit intégré dans lequel le programme est incorporé, le circuit étant adapté pour exécuter ou pour être utilisé dans l'exécution du procédé de gestion décrit précédemment.

L'invention concerne également un système d'accès à un réseau principal, comprenant au moins un point d'accès 20 du réseau principal, au moins un dispositif émetteur 21-25 du réseau secondaire associé audit au moins un point d'accès et un dispositif utilisateur tel que décrit précédemment.

## Revendications

1. Procédé de gestion d'un état d'activation d'un module d'accès radio (302) à un réseau principal d'un dispositif utilisateur (30, 31), ledit dispositif comprenant en outre un module d'accès radio (303) à un réseau secondaire, activé, ledit procédé comprenant les étapes suivantes mises en œuvre par ledit dispositif :
- lorsque le module d'accès radio au réseau principal est désactivé, recherche (E1) d'un signal balise du réseau secondaire ;
- détection (E2) d'un signal balise du réseau secondaire diffusé par un dispositif émetteur (21-25) associé à un point d'accès (20) du réseau principal ;
- réception (E3) d'une information diffusée sur le signal balise ;
- obtention d'un identifiant du point d'accès à partir de ladite information diffusée ;
- suite à la détection, activation (E4) du module d'accès radio au réseau principal ; et,
- connexion (E5) au réseau principal par l'intermédiaire du point d'accès identifié par ledit identifiant.

2. Procédé de gestion selon la revendication 1, dans lequel l'identifiant est obtenu auprès d'un dispositif central par l'intermédiaire d'un troisième réseau d'accès radio.

3. Procédé de gestion selon la revendication 1, dans lequel une association entre l'information et l'identifiant est mémorisée localement.

4. Procédé de gestion selon la revendication 1, dans lequel l'information diffusée comprend l'identifiant.

5. Procédé de gestion selon la revendication 1, comprenant en outre une étape de détection d'une déconnexion du dispositif du réseau principal et une étape de désactivation du module d'accès radio au réseau principal.

6. Dispositif utilisateur (30, 31) comprenant :
- un module d'accès radio (302) à un réseau principal ;
- un module d'accès radio (303) à un réseau secondaire, activé, agencé pour rechercher un signal balise du réseau secondaire lorsque le module d'accès radio au réseau principal est désactivé, pour détecter un signal balise du réseau secondaire diffusé par un dispositif émetteur (21-25) associé à un point d'accès (20) du réseau principal et pour recevoir une information diffusée sur le signal balise ;
- un module de commande (304), agencé pour obtenir un identifiant du point d'accès à partir de ladite information diffusée, pour activer le module d'accès radio au réseau principal sur détection d'un signal balise et déclencher une connexion au réseau principal par l'intermédiaire du point d'accès identifié par ledit identifiant.

7. Dispositif utilisateur selon la revendication 6, dans lequel le module d'accès radio secondaire est en outre agencé pour recevoir une information diffusée sur un signal balise détecté et le module de commande est agencé pour obtenir un identifiant du point d'accès à partir de ladite information diffusée.

8. Système d'accès à un réseau principal, comprenant au moins un point d'accès du réseau principal, au moins un dispositif émetteur du réseau secondaire associé audit au moins un point d'accès et un dispositif utilisateur selon la revendication 6.

9. Programme pour un dispositif utilisateur, comprenant des instructions de code de programme destinées à commander l'exécution des étapes du procédé de gestion selon l'une des revendications 1 à 5 mises en œuvre par le dispositif, lorsque ledit programme est exécuté par ledit dispositif.

10. Support d'enregistrement lisible par un dispositif utilisateur sur lequel est enregistré le programme selon la revendication 9.

## Patentansprüche

1. Verwaltungsverfahren eines Aktivierungszustands eines Funkzugangsmoduls (302) zu einem Hauptnetz einer Benutzervorrichtung (30, 31), wobei die Vorrichtung außerdem ein aktiviertes Funkzugangsmodul (303) zu einem Sekundärnetz enthält, wobei das Verfahren die folgenden Schritte enthält, die von der Vorrichtung durchgeführt werden:
- wenn das Funkzugangsmodul zum Hauptnetz deaktiviert ist, Suche (E1) nach einem Bakensignal des Sekundärnetzes;
- Erfassung (E2) eines Bakensignals des Sekundärnetzes, das von einer Sendevorrichtung (21-25) verbreitet wird, die einem Zugangspunkt (20) des Hauptnetzes zugeordnet ist;
- Empfang (E3) einer auf dem Bakensignal verbreiteten Information;
- Erhalt einer Kennung des Zugangspunkts ausgehend von der verbreiteten Information;
- nach der Erfassung, Aktivierung (E4) des Funkzugangsmoduls zum Hauptnetz; und
- Verbindung (E5) mit dem Hauptnetz mittels des durch die Kennung bezeichneten Zugangspunkts.

2. Verwaltungsverfahren nach Anspruch 1, wobei die Kennung mittels eines dritten Funkzugangsnetzes bei einer zentralen Vorrichtung erhalten wird.

3. Verwaltungsverfahren nach Anspruch 1, wobei eine Zuordnung zwischen der Information und der Kennung lokal gespeichert wird.

4. Verwaltungsverfahren nach Anspruch 1, wobei die verbreitete Information die Kennung enthält.

5. Verwaltungsverfahren nach Anspruch 1, das außerdem einen Schritt der Erfassung einer Abschaltung der Vorrichtung vom Hauptnetz und einen Schritt der Deaktivierung des Funkzugangsmoduls zum Hauptnetz enthält.

6. Benutzervorrichtung (30, 31), die enthält:
- ein Funkzugangsmodul (302) zu einem Hauptnetz;
- ein aktiviertes Funkzugangsmodul (303) zu einem Sekundärnetz, das eingerichtet ist, nach einem Bakensignal des Sekundärnetzes zu suchen, wenn das Funkzugangsmodul zum Hauptnetz deaktiviert ist, um ein Bakensignal des Sekundärnetzes zu erfassen, das von einer Sendevorrichtung (21-25) verbreitet wird, die einem Zugangspunkt (20) des Hauptnetzes zugeordnet ist, und um eine auf dem Bakensignal verbreitete Information zu empfangen;
- ein Steuermodul (304), das eingerichtet ist, um eine Kennung des Zugangspunkts ausgehend von der verbreiteten Information zu erhalten, um das Funkzugangsmodul zum Hauptnetz bei Erfassung eines Bakensignals zu aktivieren und eine Verbindung mit dem Hauptnetz mittels des von der Kennung bezeichneten Zugangspunkts auszulösen.

7. Benutzervorrichtung nach Anspruch 6, wobei das sekundäre Funkzugangsmodul außerdem eingerichtet ist, eine auf einem erfassten Bakensignal verbreitete Information zu empfangen, und das Steuermodul eingerichtet ist, eine Kennung des Zugangspunkts ausgehend von der verbreiteten Information zu erhalten.

8. Zugangssystem zu einem Hauptnetz, das mindestens einen Zugangspunkt des Hauptnetzes, mindestens eine Sendevorrichtung des Sekundärnetzes, die dem mindestens einen Zugangspunkt zugeordnet ist, und eine Benutzervorrichtung nach Anspruch 6 enthält.

9. Programm für eine Benutzervorrichtung, das Programmcodeanweisungen enthält, die dazu bestimmt sind, die Ausführung der Schritte des Verwaltungsverfahrens nach einem der Ansprüche 1 bis 5 zu steuern, die von der Vorrichtung durchgeführt werden, wenn das Programm von der Vorrichtung ausgeführt wird.

10. Speicherträger, der von einer Benutzervorrichtung lesbar ist, auf dem das Programm nach Anspruch 9 gespeichert ist.

## Claims

1. Method for managing an activation state of a module (302) for radio access to a main network of a user device (30, 31), said device comprising moreover an activated module (303) for radio access to a secondary network, said method comprising the following steps implemented by said device:
- when the module for radio access to the main network is deactivated, searching (E1) for a beacon signal of the secondary network;
- detection (E2) of a beacon signal of the secondary network broadcast by a transmitting device (21-25) associated with an access point (20) of the main network;
- receiving (E3) information broadcast on the beacon signal;
- obtaining an identifier of the access point from said broadcast information;
- after the detection, activation (E4) of the module for radio access to the main network; and,
- connection (E5) to the main network by the intermediary of the access point identified by said identifier.

2. Management method according to Claim 1, in which the identifier is obtained from a central device by the intermediary of a third radio access network.

3. Management method according to Claim 1, in which an association between the information and the identifier is stored locally.

4. Management method according to Claim 1, in which the broadcast information comprises the identifier.

5. Management method according to Claim 1, comprising moreover a step of detecting a disconnection of the device from the main network and a step of deactivation of the module for radio access to the main network.

6. User device (30, 31) comprising:
- a module (302) for radio access to a main network;
- an activated module (303) for radio access to a secondary network, arranged for searching for a beacon signal of the secondary network when the module for radio access to the main network is deactivated, and for detecting a beacon signal of the secondary network broadcast by a transmitting device (21-25) associated with an access point (20) of the main network and for receiving information broadcast on the beacon signal;
- a control module (304), arranged for obtaining an identifier of the access point from said broadcast information, for activating the module for radio access to the main network on detection of a beacon signal and for initiating a connection to the main network by the intermediary of the access point identified by said identifier.

7. User device according to Claim 6, in which the secondary radio access module is moreover arranged for receiving information broadcast on a detected beacon signal and the control module is arranged for obtaining an identifier of the access point from said broadcast information.

8. System for access to a main network, comprising at least one access point of the main network, at least one transmitting device of the secondary network associated with said at least one access point and a user device according to Claim 6.

9. Program for a user device, comprising program code instructions intended for controlling the execution of the steps of the management method according to one of Claims 1 to 5, implemented by the device, when said program is executed by said device.

10. Recording medium readable by a user device on which the program according to Claim 9 is recorded.
